# EUROPÄISCHE PATENTSCHRIFT

(11) **EP 2 805 181 B1**
(45) Veröffentlichungstag und Bekanntmachung des Hinweises auf die Patenterteilung: **20.02.2019**
(21) Anmeldenummer: 12808726.9
(22) Anmeldetag: 07.12.2012
(51) Int. Cl.: G01S 7/527

(54) **VERFAHREN ZUR BESTIMMUNG DER POSITION UND/ODER BEWEGUNG VON OBJEKTEN IN DER UMGEBUNG EINES BEWEGUNGSHILFSMITTELS MITTELS VON SCHALLSIGNALEN SOWIE VORRICHTUNG ZUR DURCHFÜHRUNG DES VERFAHRENS**
METHOD FOR DETERMINING THE POSITION AND/OR THE MOVEMENT OF OBJECTS IN THE ENVIRONMENT OF A MEANS OF TRANSPORTATION BY MEANS OF ACOUSTIC SIGNALS AND DEVICE FOR CARRYING OUT SAID METHOD
PROCÉDÉ POUR DÉTERMINER LA POSITION ET/OU LE MOUVEMENT D'OBJETS SITUÉS DANS L'ENVIRONNEMENT D'UN MOYEN D'AIDE AU DÉPLACEMENT AU MOYEN DE SIGNAUX ACOUSTIQUES ET DISPOSITIF POUR LA MISE EN OEUVRE DUDIT PROCÉDÉ

(30) Priorität: 19.01.2012 DE 102012200716
(43) Veröffentlichungstag der Anmeldung: 26.11.2014
(73) Patentinhaber: Robert Bosch GmbH, 70442 Stuttgart (DE)
(72) Erfinder: Karl, Matthias, 76275 Ettlingen (DE)
(86) Internationale Anmeldenummer: PCT/EP2012/074804
(87) Internationale Veröffentlichungsnummer: WO 2013/107564

(56) Entgegenhaltungen:
- GB-A- 2 059 590
- US-A- 3 562 703

## Beschreibung

### Bereich der Erfindung

Die Erfindung betrifft ein Verfahren zur Bestimmung der Position und/oder Bewegung von Objekten in der Umgebung eines Bewegungshilfsmittels mittels pulsförmig ausgesendeter und an mindestens einem Objekt reflektierter Schallsignale, bevorzugt Ultraschallsignale, bei dem eine momentane Stärke eines empfangenen reflektierten Schallsignals mittels eines Echopuls-Schwellenwertes bewertet wird. Insbesondere betrifft die Erfindung ein Verfahren zur Bestimmung der Position und/oder Bewegung von Objekten, bei denen eine lückenrobuste Schwellenüberschreitungsdetektion vorgenommen werden kann. Ferner betrifft die Erfindung eine Vorrichtung zur Durchführung des erfindungsgemäßen Verfahrens sowie ein Bewegungshilfsmittel, das mit der erfindungsgemäßen Vorrichtung ausgestattet ist.

### Stand der Technik

Zur akustischen Erfassung des Umfeldes von Fahrzeugen werden derzeit üblicherweise Systeme im Ultraschallbereich verwendet, bevorzugt pulsweise messende. Dabei werden typischerweise alle 10ms bis 300ms über einen Elektro-Akustik-Wandler akustische Pulse mit einer Ultraschallfrequenz von ca. 50 kHz ausgesandt und die daraus resultierenden, mittels eines Akustik-Elektro-Wandlers empfangenen Ultraschallsignale, d.h. Echopulse ausgewertet. So wird aus der Pulslaufzeit, d.h. der Laufzeit des Ultraschallsignals von den sendenden zu den empfangenen Wandlern, genauer gesagt aus der Zeit zwischen Aussenden des Ultraschallsignals und des Empfangens des entsprechenden an einem Objekt reflektierten Signals, auf einen Objektabstand im Raum geschlussfolgert. Dazu werden zur Erzeugung der Ultraschallsignale sowohl das heute übliche sprungförmige Ein- und Ausschalten eines Ultraschallträgers als auch andere Modulationsfensterformen, wie z.B. die Modulation eines Ultraschallträgers mittels gaussförmiger Glocke, verwendet. Allgemein wird das empfangene Ultraschallsignal daraufhin geprüft, ob und wenn ja zu welchem Zeitpunkt in ihm ein Echo im Bereich der Frequenz des ausgesandten Signals mit einer hinreichend langen Mindestdauer Tₘᵢₙ in ausreichender Mindeststärke *l*(*τ*) vorhanden ist. Die Mindestdauer Tₘᵢₙ wird verwendet, um beispielsweise zu verhindern, dass auch Störpulse, wie kurzzeitige Knackgeräusche, fälschlicherweise als Echopulse erkannt werden.

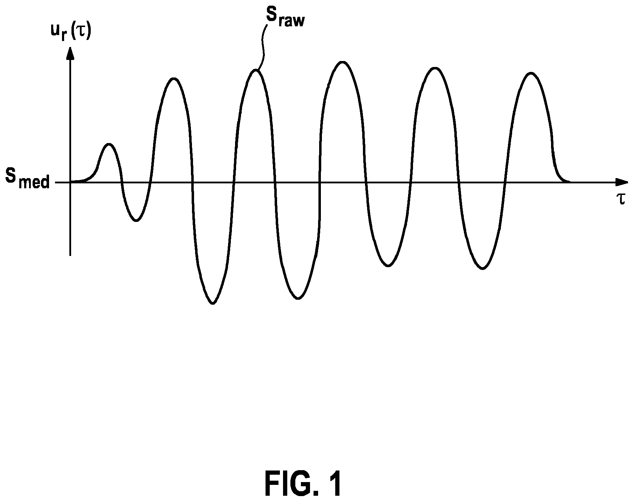

In Figur 1 wird beispielhaft ein Verlauf eines empfangenen Ultraschall-Rohsignals S_{raw} gezeigt. In dem in Figur 1 betrachteten Zeitabschnitt hat die Signalstärke *uᵣ*(*τ*) des Rohsignals S_{raw} den Mittelwert S_{med}. Ferner schwillt die Signalstärke *uᵣ*(*τ*) zunächst ausgehend von dem Wert 0 an und schwingt im weiteren Verlauf mit einer Frequenz und endlicher Stärke, die auszuwerten ist.

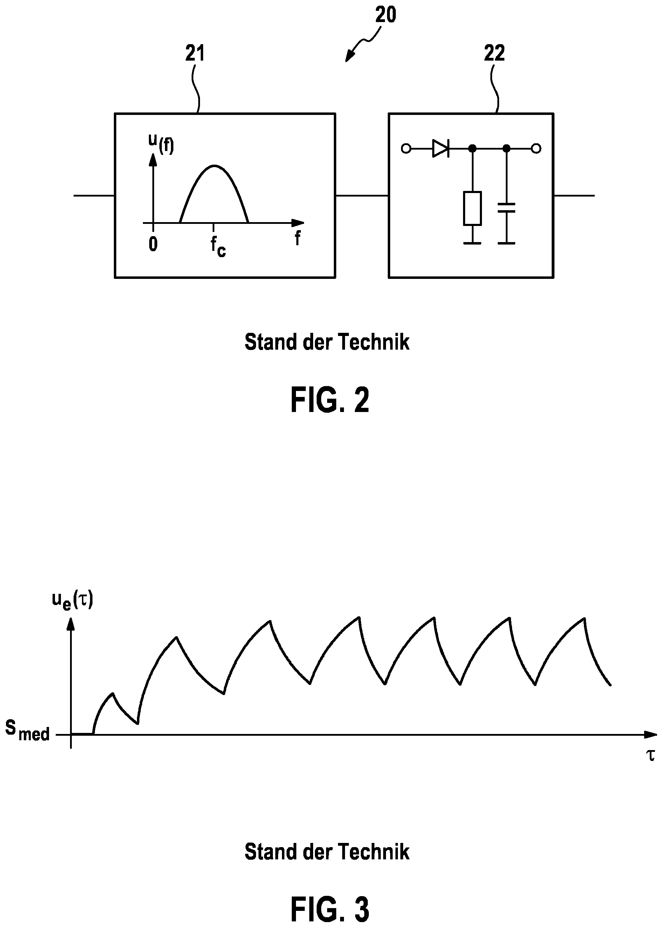

Um ein solches um einen Mittelwert schwingendes Rohsignal bezüglich seiner Signalstärke auszuwerten, werden gemäß dem Stand der Technik unterschiedliche in Frage kommende Verfahren verwendet. Im Folgenden werden in diesem Zusammenhang einige bekannte, notwendige Aspekte nochmals diskutiert. Im Allgemeinen werden für die Signalauswertung Filter verwendet. Im einfachsten Fall besteht dazu das Filter sowohl aus einem Bandpass als auch aus einem nachfolgenden Einweggleichrichter. In Figur 2 ist ein Blockschaltbild eines solchen Filters 20 dargestellt. Dabei hat der Bandpass 21 eine frequenzabhängige Durchlässigkeit/Empfindlichkeit u(f) mit einer Empfindlichkeits-Verteilung um eine Filter-spezifische Mittenfrequenz f_{c}, für die das Filter eine maximale Empfindlichkeit aufweist. Wie ferner in Figur 2 gezeigt, weist der Einweggleichtrichter 22 zwischen seinen beiden Anschlüssen eine Diode und ferner einen Widerstand und eine Speicherkapazität auf, die mit einem Referenzpotential bzw. mit Masse verbunden sind.

Die Ausgangsspannung bei einer Einweggleichrichtung folgt bei gegenüber dem Mittelwert zunehmender positiver Eingangsspannung dem Spannungsverlauf der Eingangsspannung abzüglich der Durchlassspannung der Diode. Nimmt die positive Eingangsspannung wieder ab oder ist die Eingangsspannung sogar kleiner als der Mittelwert, so wird der Verlauf der Ausgangsspannung durch die Speicherkapazität und den Innenwiderstand am Ausgang der Einweggleichrichtung bestimmt. Fehlt die Speicherkapazität bzw. ist sie vernachlässigbar, so folgt die Ausgangsspannung unmittelbar dem Verlauf der positiven Eingangsspannung bzw. ist gleich dem Mittelwert, wenn die Eingangsspannung unterhalb des Mittelwertes ist.

In Figur 3 ist ein beispielhafter Verlauf eines mittels Einweggleichtrichter generierten Signalverlaufs dargestellt. Die Ausgangsspannung eines Einweggleichrichters kann als Eingangswert für einen nachfolgenden Filterwert-Schwellenschalter verwendet werden, und wird in Figur 3 als *uₑ*(*τ*) bezeichnet. Der in Figur 3 gezeigte Signalverlauf kann beispielsweise aus einer Filterung des in Figur 1 gezeigten Rohsignals S_{raw} mittels eines Filters 20 gemäß Figur 2 resultieren.

Alternativ kann auch ein Zweiweggleichrichter verwendet werden.

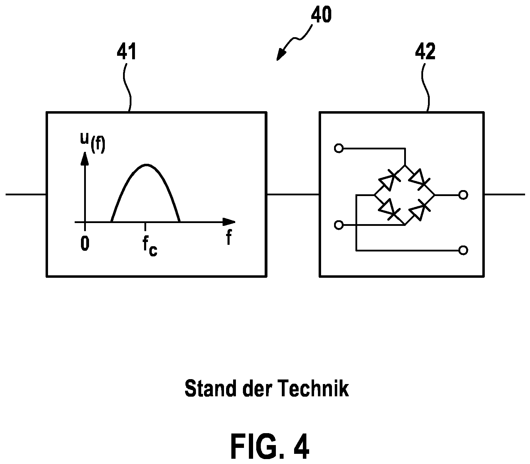

In Figur 4 ist beispielhaft ein Blockschaltbild eines Filters 40 mit einem Bandpass 41 und einem Zweiweggleichrichter 42 dargestellt. Der Zweiweggleichtrichter 42 weist vier Anschlüsse und eine Brückenschaltung aus 4 Dioden auf. Bei Verwendung eines Zweiweggleichrichters im Filter wird auch die bezüglich des Mittelwertes negative Halbwelle mittels Dioden gewandelt, so dass der Ausgang der Zweiweggleichrichtung bei positiver Eingangsspannung dem Verlauf der Eingangsspannung abzüglich der Durchlassspannung der beiden im Pfad befindlichen Dioden folgt. Die Ausgangsspannung folgt der bezüglich des Mittelwerts negativen Eingangsspannung betragsmäßig dem Verlauf der Eingangsspannung abzüglich der Durchlassspannung der beiden im Pfad befindlichen Dioden.

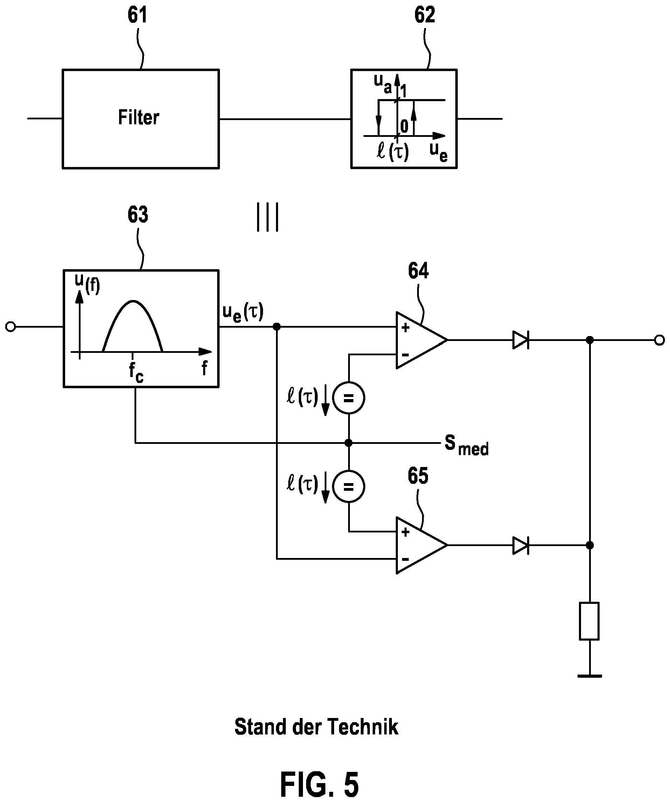

Eine alternative Lösung der Zweiweggleichrichtung mittels um einen Mittelwert spiegelsymmetrischer Schwelle *l*(*τ*) ist in Figur 5 dargestellt. Gemäß Figur 5 besteht eine Kombination aus Filter 61 und Schwellenschalter 62 aus einem Bandpass 63 sowie zwei parallel geschalteten Schwellenschaltern 64, 65, deren Ausgänge logisch ver-ODER-t werden. Ist das Eingangssignal *uₑ*(*τ*) der parallel geschalteten Schwellenschalter größer als der Mittelwert zuzüglich der Schwelle *l*(*τ*), so wird das Ausgangssignal des oberen in Figur 5 gezeigten Operationsverstärkers 64 positiv. Entsprechend wird das Ausgangssignal des unteren Operationsverstärkers 65 positiv, wenn das Eingangssignal *uₑ*(*τ*) der parallel geschalteten Schwellenschalter kleiner als der Mittelwert abzüglich der Schwelle *l*(*τ*) ist. Falls keiner der beiden Operationsverstärker ein positives Ausgangssignal generiert, erzeugt die ODER-Schaltung ein logische "0" an ihrem Ausgang.

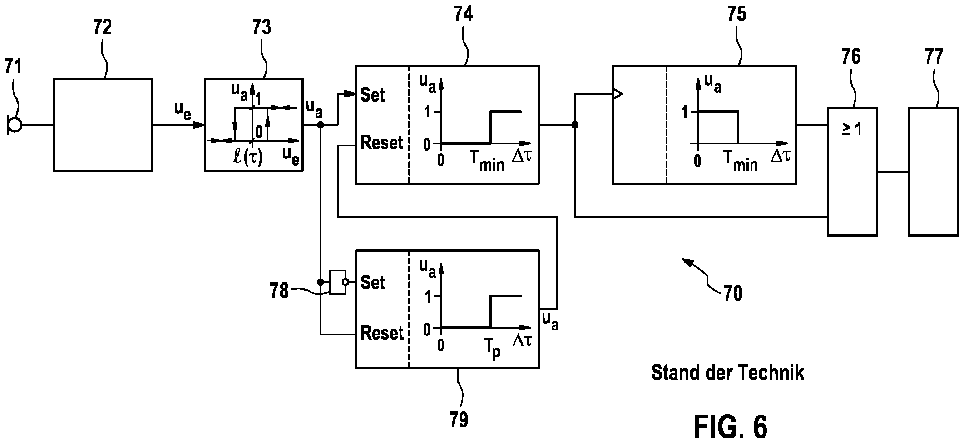

In Figur 6 wird ein Blockschaltbild einer kompletten Echopulsbewertungs-Schaltung 70 gemäß dem Stand der Technik gezeigt, mit der die oben genannte Aufgabe, zu prüfen, ob und wenn ja zu welchem Zeitpunkt in einem reflektierten, empfangenen Ultraschallsignal ein Echo im Bereich der Frequenz eines ausgesandten Signals mit einer hinreichend langen Mindestdauer Tₘᵢₙ in ausreichender Mindeststärke *l*(*τ*) vorhanden ist, durchgeführt werden kann.

Gemäß der in Figur 6 dargestellten Vorrichtung nimmt der durch ein Mikrofon-Symbol symbolisch dargestellte empfangende Wandler 71 die ankommenden Ultraschallsignale auf und filtert sie im Empfangsfilter 72. Das so aufbereitete Signal wird als Eingangssignal *u*ₑ(*τ*) an den nachfolgenden Filter-Schwellenschalter 73 weitergereicht. Dabei wird das in Figur 3 dargestellte gleichgerichtete Signal dem Schwellenschalter als Eingangswert *u*ₑ(*τ*) zur Auswertung zur Verfügung gestellt. Mittels laufzeitabhängiger Schwelle *l*(*τ*) wird das eingehende Wechselsignal *u*ₑ(*τ*) bewertet. Überschreitet der momentane Eingangswert *u*ₑ(*τ*) zu einem Zeitpunkt *τ* die Schwelle *l*(*τ*) (gegebenenfalls zuzüglich der beim Schwellenschalter üblichen, hier nicht im Detail diskutierten Hysterese), so geht der Ausgangswert *u*ₐ(*τ*) des Schwellenschalters auf den logischen Wert 1 = *u*ₐ(*τ*). Unterschreitet dahingegen der Eingangswert *u*ₑ(*τ*) die Schwelle *l*(*τ*) deutlich, so geht der Ausgangswert *u*ₐ(*τ*) auf den logischen Wert 0 = *u*ₐ(*τ*). Weiter wird das Vergleichsergebnis *u*ₐ(*τ*) mittels "Tₘᵢₙ-Ein-Verzögerer" 74, Inverter 78, "Tₚ-Ein-Verzögerer" 79, "Tₘᵢₙ-Aus-Verzögerer" 75, einem "ODER-Glied" 76, sowie einer Pulsauswertung 77 bewertet. Ist der logische Vergleichswert *u*ₐ(*τ*) nur kurzzeitig auf logisch "1", so wird der Timer im Tₘᵢₙ-Ein-Verzögerer 74 gestartet und der Ausgang des Tₘᵢₙ-Ein-Verzögerers geht auf logisch "1", wenn dessen Timer länger als "Tₘᵢₙ" ununterbrochen gelaufen ist. Dieser Timer wird zurückgesetzt, und der Ausgang des Tₘᵢₙ-Ein-Verzögerer 74 wird zurück auf logisch "0" gesetzt, sobald der dominante "Reset"-Eingang des Tₘᵢₙ-Ein-Verzögerer 74 auf logisch "1" gesetzt wurde.

Ferner wird der Tₚ-Ein-Verzögerer 79 verwendet, um einen Echopuls auch bei einer kurzzeitigen Unterschreitungen der Schwelle *l*(τ) nach ordnungsgemäß als Echopuls zu erkennen. Der Timer des Tₚ-Ein-Verzögerers 79 ist funktionell baugleich wie der des Tₘᵢₙ-Ein-Verzögerers 74, jedoch durch eine andere Verzögerungszeit Tₚ charakterisiert.

Überschreitet beim Stand der Technik der Momentanwert des Echopulses kurzzeitig den Schwellenwert, d.h. ist der Vergleichswert *u*ₐ(*τ*) zumindest kurzzeitig auf logisch "1", so wird der Timer im Tₘᵢₙ-Ein-Verzögerer 74 gestartet, und gleichzeitig wird der Timer im Tₚ-Ein-Verzögerer 79 gestoppt. Unterschreitet danach beim Stand der Technik der Momentanwert des Echopulses den Schwellenwert *l*(*τ*), d.h. der Vergleichswert *uₐ*(*τ*) geht wieder auf logisch "0", so wird infolge des Inverters 78 auch der Timer im Tₚ-Ein-Verzögerer 79 wieder gestartet. Verbleibt der Vergleichswert *u*ₐ(*τ*) über länger als die Zeit Tₚ auf logisch "0", so wird der Tₘᵢₙ-Ein-Verzögerer 74 über den dominanten "Reset"-Eingang zurückgesetzt.

Eine Zeitdauer von Tₘᵢₙ, nachdem die Schwelle /(τ) durch das Eingangssignal überschritten wurde, schaltet der Ausgang des Tₘᵢₙ-Ein-Verzögerer 74 bei kontinuierlich starkem Echo auf logisch "1", was durch die nachfolgende "ODER"-Schaltung unmittelbar zur Pulsauswertung weitergereicht wird. Fällt der Ausgang des Tₘᵢₙ-Ein-Verzögerers 74 wieder auf logisch "0" zurück, so wird der flankengetriggerte Tₘᵢₙ-Aus-Verzögerer 75 durch die fallende Flanke getriggert. In Verbindung mit der nachfolgenden "ODER"-Verknüpfung wird auf diese Weise der Rückgang des Überschreitens um eine Zeit Tₘᵢₙ verzögert. Auf diese Weise wird an die Pulsauswertung ein Puls übergeben, der so lang ist, wie die Dauer der Überschreitung der Schwelle *l*(*τ*) durch die Echostärke, jedoch im Verhältnis zum Echosignal um eine gleichbleibende Verzögerungszeit Tₘᵢₙ verzögert.

Ein ununterbrochenes Hochlaufen des Timers im Tₘᵢₙ-Ein-Verzögerers 74 findet nur dann statt, wenn der Vergleichswert *uₐ*(*τ*) stets kürzer als Tₚ auf logisch "0" verharrt. Ferner wird also nur dann ein Überschreiten der Schwelle *l*(*τ*) durch den Echopuls über eine Mindestdauer Tₘᵢₙ erkannt, wenn eine einzelne Unterschreitung weniger als Tₚ gedauert hat. Dazu wird Tₚ üblicherweise auf ca. 0,5 bis 2 Periodendauern des zu erwartenden Echopulses und Tₘᵢₙ typischerweise auf 15% ... bis 90% der Dauer des gesendeten Schallpulses eingestellt.

Einige andere Echopulsbewertungs-Schaltungen des Standes der Technik weisen im Wesentlichen das gleiche, oben beschriebene Verhalten auf, verwenden aber möglicherweise andere Komponenten als die in Figur 6 beschrieben, bzw. die Schaltung wird anders realisiert,

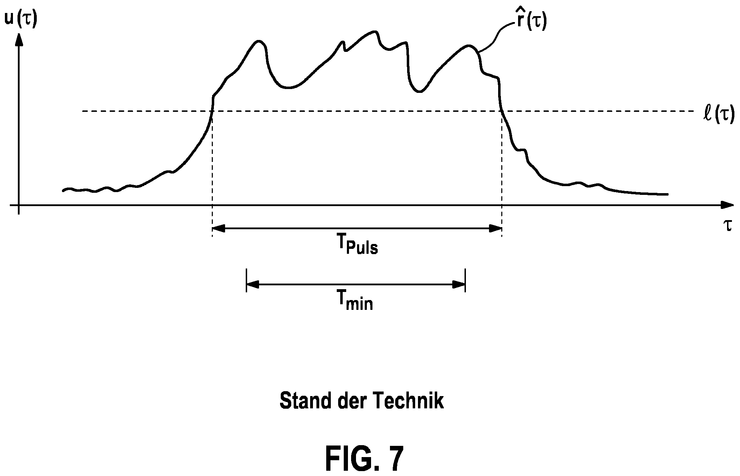

Wie oben bereits angedeutet, kann es bei detektierten Echopulsen zu Einkerbungen im Signalverlauf der Echoamplitude kommen. In Figur 7 wird ein beispielhafter Verlauf *r̂*(*τ*) eines zu detektierenden, reflektierten Echopulses bzw. dessen Einhüllende gezeigt. Der Echopuls *r̂*(*τ*) überschreitet in diesem Fall die Echopuls-Schwelle *l*(*τ*) ununterbrochen für eine Pulsdauer T_{Puls}, welche in diesem Beispiel größer als die vorbestimmte Mindestzeit Tₘᵢₙ ist. Somit entspricht der in Figur 7 gezeigte Echopulsverlauf sozusagen einem Wunschverlauf der Überschreitung der Schwelle durch die Signalstärke, und der Echopuls wird detektiert.

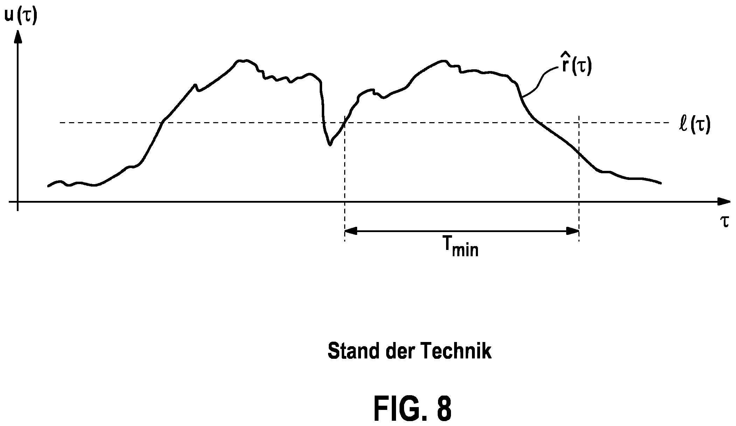

Jedoch können die Verläufe der Echopulsamplituden *r̂*(*τ*) infolge physikalischer Effekte Einkerbungen aufweisen oder/und auch auseinanderlaufen. Der Stand der Technik ist nicht in der Lage, ein Echo noch als gültiges Echo zu erkennen, wenn es Einkerbungen im Echostärkeverlauf hat und gleichzeitig gegenüber dem Sendepuls auseinander gelaufen ist. Ein Beispiel für einen entsprechenden Echopulsverlauf ist in Figur 8 gezeigt. Der Signalverlauf *r̂*(*τ*) weist eine Einkerbung auf, bei der der Echopuls-Schwellenwert *l*(*τ*) unterschritten wird, so dass zu keinem Zeitpunkt die Signalstärke zusammenhängend eine Dauer größer Tₘᵢₙ überschritten ist. Dies hat zur Folge, dass bei diesem Echo kein Echopuls detektiert wird.

Die Ursache für das Entstehen von Einkerbungen und scheinbar auseinander laufenden Pulsen kann einerseits durch die integrierenden Wirkung der in der Übertragungsstrecke befindlichen Glieder bedingt sein, wie z.B. den Bandpassfiltern oder den Wandlern. Ferner können Temperaturschwankungen und Windböen erheblichen Einfluss auf die Signalform des Echopulses haben, wodurch ebenfalls gravierendere Einkerbungen auftreten können. Diese sind erheblich länger als die beim Stand der Technik üblichen Werte von Tₚ. Somit werden solche Echos trotz einer großen Signalstärke nicht erkannt. Auch eine Erhöhung von Tₚ schafft keine Abhilfe, da dann auch die oben erwähnten Störpulse, wie kurzzeitige Knackgeräusche, als Echopulse erkannt werden würden.

Erfindungsgemäß wir daher ein Verfahren vorgeschlagen, dass einen Echopuls auch dann als gültigen Echopuls anerkennt, wenn die zeitliche Summe der Überschreitungen des Echopuls-Schwellenwertes *l*(*τ*) durch den Verlauf der Echoamplitude *r̂*(*τ*) im Umfeld von kurzzeitigen Unterschreitungen des Echopuls-Schwellenwertes *l*(*τ*) durch den Echoamplitudenverlauf *r̂*(*τ*) durch Einkerbungen größer als eine Größe Tₘᵢₙ zuzüglich der Unterschreitungsdauer der Einkerbung ist.

Aus der US 3562703 ist eine Vorrichtung zum Empfang und zur Verarbeitung eines Echopulses bekannt, bei der sowohl die Amplitude als auch eine Pulsweitenfilterung zur Unterscheidung zwischen Bodenechos und Echos von untergetauchten schwimmenden Objekte unter einer vorbestimmten Größe verwendet wird.

### Kurze Beschreibung der Zeichnungen

Nachfolgend werden Ausführungsbeispiele der Erfindung unter Bezugnahme auf die begleitenden Zeichnungen im Detail beschrieben. In den Zeichnungen zeigen:
- Figur 1: ein Beispiel eines empfangenen Rohsignals,
- Figur 2: ein Blockschaltbild eines Filters, das zur Signalentscheidung verwendet werden kann, gemäß dem Stand der Technik,
- Figur 3: einen beispielhaften Verlauf eines mittels Einweggleichtrichter generierten Signalverlaufs,
- Figur 4: ein Blockschaltbild eines Filters mit einem Bandpass und einem Zweiweggleichrichter, das zur Signalentscheidung verwendet werden kann, gemäß dem Stand der Technik,
- Figur 5: ein Blockschaltbild einer Zweiweggleichrichtung mittels um den Mittelwert spiegelsymmetrischer Schwellen *l*(*τ*),
- Figur 6: ein Blockschaltbild einer Echopulsbewertungs-Schaltung gemäß dem Stand der Technik,
- Figur 7: ein Zeit-Signalstärken-Diagramm eines Verlaufs *r̂*(*τ*) eines empfangenen, reflektierten Ultraschallsignals unter idealen Bedingungen, bei dem keine Unterschreitung des Echopuls-Schwellenwertes *l*(*τ*) während einer minimalen Zeitdauer Tₘᵢₙ auftritt, gemäß dem Stand der Technik,
- Figur 8: ein Zeit-Signalstärken-Diagramm eines Verlaufs der Echoamplitude *r̂*(*τ*) mit Einkerbung eines empfangenen, reflektierten Schallsignals, bei dem der Echopuls-Schwellenwert *l*(*τ*) unterschritten wird, so dass zu keinem Zeitpunkt die Signalstärke zusammenhängend eine Dauer größer Tₘᵢₙ überschritten ist,
- Figur 9: schematische Signalverlaufs-Diagramme, wobei im oberen Teil ein Zeit-Signalstärken-Diagramm eines Verlaufs der Echoamplitude *r̂*(*τ*) mit Einkerbung eines empfangenen, reflektierten Schallsignals, bei dem der Echopuls-Schwellenwert *l*(*τ*) unterschritten wird, und im unteren Teil der entsprechende Verlauf der erfindungsgemäßen Bewertungsgröße *Z*(*τ*) gezeigt wird, gemäß einem Ausführungsbeispiel der Erfindung, und
- Figur 10: eine Vorrichtung zur technische Realisierung des erfindungsgemäßen Verfahren, gemäß einem Ausführungsbeispiel der Erfindung.

### Offenbarung der Erfindung

Erfindungsgemäß wird ein Verfahren zur Bestimmung der Position und/oder Bewegung von Objekten in der Umgebung eines Bewegungshilfsmittels mittels pulsförmig ausgesendeter und an mindestens einem Objekt reflektierter Schallsignale, insbesondere Ultraschallsignale, gemäß dem unabhängigen Anspruch 1 geschaffen.

Erfindungsgemäß wird bei einem Verfahren zur Bestimmung der Position und/oder Bewegung von Objekten in der Umgebung eines Bewegungshilfsmittels mittels pulsförmig ausgesendeter und an mindestens einem Objekt reflektierter Schallsignale, insbesondere Ultraschallsignale, eine momentane Stärke mindestens eines empfangenen reflektierten Schallsignals, im Folgenden als Echopuls bezeichnet, mittels eines Echopuls-Schwellenwertes *l*(*τ*) bewertet. Dabei wird ein Echopuls für eine Weiterverarbeitung als gültiger Echopuls anerkannt, wenn die zeitliche Summe der Überschreitungen des Echopuls-Schwellenwertes *l*(*τ*) durch den Verlauf der Echoamplitude *r̂*(*τ*) im Umfeld von einer oder mehreren kurzzeitigen Einkerbungen, die sich als Unterschreitungen des Echopuls-Schwellenwertes *l*(*τ*) durch den Echoamplitudenverlauf *r̂*(*τ*) darstellen, größer ist als eine vorbestimmte Zeitdauer Tₘᵢₙ zuzüglich der Summe der Dauern der einen oder mehreren Unterschreitungen.

Somit wird ein Verfahren zur Auswertung von pulsförmigen Schall-Echopulsen mittels (laufzeitabhängigem) Schwellenwert *l*(*τ*) und einer Mindestüberschreitungsdauer *T*ₘᵢₙ zur geschaffen, das vorteilhaft robust gegenüber im Verhältnis zu *T*ₘᵢₙ kurzzeitigen Unterbrechungen der Überschreitung des Schwellenwertes ist und trotzdem eine hinreichende Störrobustheit mit sich bringt. Dies wird erfindungsgemäß insbesondere dadurch erreicht, indem mit Hilfe der Verfahrensschritte, wie sie im kennzeichnenden Teil des unabhängigen Anspruchs 1 offenbar sind, überprüft werden kann, dass trotz kurzzeitiger Unterbrechungen der Überschreitung die Gesamtüberschreitung größer als die Mindestüberschreitungsdauer *T*ₘᵢₙ ist.

Erfindungsgemäß wird ferner eine Vorrichtung zur Bestimmung der Position und/oder Bewegung von Objekten in der Umgebung eines Bewegungshilfsmittels mittels pulsförmig ausgesendeter und an mindestens einem Objekt reflektierter Schallsignale bereitgestellt, die dazu eingerichtet ist, das Verfahren nach einem der vorhergehenden Ansprüche durchzuführen.

Weiterhin wird ein Bewegungshilfsmittel mit einer Vorrichtung zur Bestimmung der Position und/oder Bewegung von Objekten in der Umgebung eines Bewegungshilfsmittels mittels pulsförmig ausgesendeter und an mindestens einem Objekt reflektierter Schallsignale geschaffen, wobei die Vorrichtung dazu eingerichtet ist, das erfindungsgemäße Verfahren durchzuführen. Das Bewegungshilfsmittel kann beispielsweise ein Krankenfahrstuhl, ein Segway, ein Fahrrad, oder ein Personenkraftfahrzeug, Lastkraftfahrzeug, Bus, ein Elektroauto, oder ein sonstiges Fahrzeug sein.

Bevorzugte Weiterbildungen der Erfindung ergeben sich aus den abhängigen Ansprüchen.

Erfindungsgemäß wird eine Bewertungsgröße *Z*(*τ*) in Abhängigkeit von der momentanen Stärke des Echopulses zeitproportional verändert, indem ab einem ersten Überschreiten des Echopuls-Schwellenwertes *l*(*τ*) durch den Echopuls die Bewertungsgröße *Z*(*τ*) startend von einer Anfangsgröße *Z_{off}* in Richtung zu einer maximalen Endgröße *Zₒₙ* hin verändert wird, solange die maximale Endgröße *Zₒₙ* nicht erreicht ist und die Stärke des Echopulses den Echopuls-Schwellenwert *l*(*τ*) überschreitet, und die Bewertungsgröße *Z*(*τ*) in Richtung von der maximalen Endgröße *Zₒₙ* zu der Anfangsgröße *Z_{off}* hin verändert wird, solange die Anfangsgröße *Z_{off}* nicht wieder erreicht ist und die momentane Stärke des Echopulses den Echopuls-Schwellenwert *l*(*τ*) unterschreitet. Überschreitet die Bewertungsgröße *Z*(*τ*) einen Schwellwert *Z_{S}* = *Fkt*(*T*ₘᵢₙ), so wird der Echosignalverlauf als Eintreffen eines Echosignals bezeichnet.

Beispielsweise kann dabei eine Unterschreitung des Echopuls-Schwellenwertes *l*(*τ*) als kurzzeitige Unterschreitung erkannt werden, wenn die Zeitdauer der jeweiligen Unterschreitung eine zweite vorbestimmte Zeitdauer Tₚ, deren Länge beispielsweise in dem Bereich von 0,5 bis 2 Schwingungsperioden eines Echopulses liegt, nicht überschreitet.

Nach einem Ausführungsbeispiel der Erfindung wird die Anfangsgröße *Z_{off}* kleiner als die maximale Endgröße *Zₒₙ* gewählt, so dass wegen *Z_{off}* < *Zₒₙ* bei einem ersten Überschreiten des Echopuls-Schwellenwertes *l*(*τ*) die Bewertungsgröße *Z*(*τ*) startend von einer Anfangsgröße *Z_{off}* zeitproportional zunimmt, solange die Stärke des Echopulses den Echopuls-Schwellenwert *l*(*τ*) überschreitet, maximal jedoch bis zur maximalen Endgröße *Zₒₙ.* Ferner nimmt bei dieser Ausführungsform die Bewertungsgröße *Z*(*τ*) zeitproportional ab, solange die Stärke des Echopulses den Echopuls-Schwellenwerts *l*(*τ*) unterschreitet, jedoch nur solange die Anfangsgröße *Z_{off}* als Untergrenze nicht erreicht ist.

Gemäß einer bevorzugten Weiterbildung kann die Bewertungsgröße *Z*(*τ*) mittels eines Bewertungsgrößen-Schwellenwerts *Z_{S}* bewertet werden, wobei ein erster Zeitpunkt *τ*₁ des Überschreitens des Bewertungsgrößen-Schwellenwerts *Z_{S}* durch die Bewertungsgröße *Z*(*τ*) sowie ein zweiter Zeitpunkt *τ*₀ des Unterschreitens des Bewertungsgrößen-Schwellenwerts *Z_{S}* durch die Bewertungsgröße *Z*(*τ*) erfasst werden.

Nach einer vorteilhaften Weiterbildung kann anhand des ersten Zeitpunktes *τ*₁ des Überschreitens von *Z_{S}* durch die Bewertungsgröße *Z*(*τ*) und des zweiten Zeitpunktes *τ*₀ des Unterschreitens *Z_{S}* durch die Bewertungsgröße *Z*(*τ*) ein Maß für die Echolaufzeit und/oder ein Maß für die Echopulsdauer eines pulsförmigen ausgesendeten Schallsignals bestimmt werden.

Bevorzugt kann das zeitproportionale Verändern bzw. die Veränderungsrate der Bewertungsgröße *Z*(*τ*) derart eingestellt werden, dass ein zeitkontinuierliches streng monotones Verändern der Bewertungsgröße *Z*(*τ*) startend von *Z_{off}* bis zum Erreichen von *Z_{S}* eine vorbestimmte Zeitdauer *T*ₘᵢₙ dauert, und/oder dass ein zeitkontinuierliches streng monotones Verändern der Bewertungsgröße *Z*(*τ*) startend von *Zₒₙ* bis zum Erreichen von *Z_{S}* die vorbestimmte Zeitdauer *Tₘᵢₙ* dauert.

Gemäß einer Ausführungsform der Erfindung kann der ausgesendete Schallpuls ein pulsförmig moduliertes Signal mit zeitinvarianter fester Schallfrequenz oder ein frequenzmoduliertes Signal oder ein Gemisch von Signalen mehrerer Schallsignale mit fester und/oder frequenzmodulierter Trägerfrequenz sein.

Ferner kann bei einer Auswertung der Echopulse die Zeitdifferenz zwischen dem Ende des Aussendens des ausgesendeten Schallpulses und dem Zeitpunkt *τ_{E}* = 0.5·(*τ*₀+*τ*₁) als Echolaufzeit genutzt werden.

Ferner kann die Zeitdifferenz (*τ*₀-*τ*₁) linear in die Berechnung der Pulsdauer eingehen.

Ferner kann die Zeitdauer *T_{Puls}* = *T*ₘᵢₙ + (*τ*₀-*τ*₁) in der Berechnung bei der Auswertung der Echopulse als die Pulsdauer genutzt werden.

Gemäß einer Ausführungsform der Erfindung kann die Pulsdauer und/oder die Empfangslaufzeit mittels Intrapulsanalyse bestimmt werden.

Ferner kann zur Bewertung des Echopulses mindestens ein derartiger Zwischenwert *Z*ᵢₙₜ der Bewertungsgröße mit herangezogen werden, bei welchem Zwischenwert begonnen wird, die Bewertungsgröße *Z*(*τ*) in Richtung von der maximalen Endgröße *Zₒₙ* zu der Anfangsgröße *Z_{off}* hin zu verändern.

Bevorzugt wird bei dem erfindungsgemäßen Verfahren anhand der Auswerteergebnisse der Echopulse der Benutzer des Bewegungshilfsmittels über den Abstand, die Position und/oder Bewegungsrichtung von in der Umgebung befindlichen Objekten mittels optischer und/oder akustischer Mittel informiert und/oder die Bewegungsrichtung und/oder Geschwindigkeit werden lenkend bzw. bremsend automatisch verändert und/oder es werden Mittel zur Senkung von Unfallfolgen, wie Gurtstraffer, und/oder Airbags und/oder Fensterheber und/oder Anheben der Motorhaube aktiviert oder gesteuert.

Die Erfindung ist jedoch nicht auf diese Arten von Bewegungshilfsmitteln beschränkt sondern kann auch auf andere Arten von Bewegungshilfsmitteln in geeigneter Weise angewendet werden.

### Ausführungsformen der Erfindung

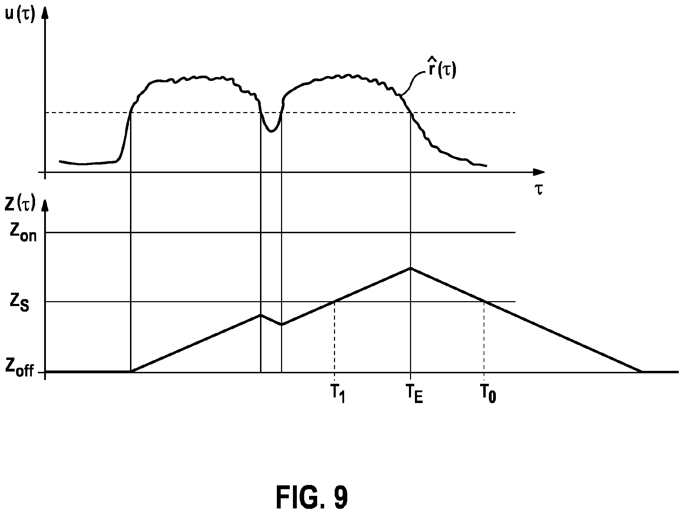

In der Figur 9 werden beispielhaft Signalverläufe gemäß einem Ausführungsbeispiel der Erfindung schematisch dargestellt. Wie im oberen Teil von Figur 9 gezeigt wird, weist der auszuwertende Echopuls *r̂*(*τ*) eine Einkerbung auf. Genauer gesagt weist der Verlauf der Signalstärke des Echos eine Einkerbung in der zeitlichen Mitte des Pulses auf, so dass bezüglich des gestrichelt dargestellten Schwellenwertes der Puls in zwei Teilpulse aufgeteilt wird. Vergleichbar wie bei dem in Figur 8 dargestellten Echopuls hat keiner der beiden Teilpulse gemäß Figur 9 eine Länge von mindestens Tₘᵢₙ. Daher wäre, im Gegensatz zu dem erfindungsgemäßen Verfahren, der Algorithmus gemäß dem Stand der Technik aufgrund der Einkerbung nicht in der Lage, diesen Puls zu detektieren.

Im unteren Teil von Figur 9 ist beispielhaft der zu dem Signal dazugehörige erfindungsgemäße Verlauf der Bewertungsgröße *Z*(*τ*) für das oben gezeigte Signal des zu empfangenden Echopulses gezeigt. Mit dem Beginn des Überschreitens der in Figur 9, oben, gestrichelt dargestellten Schwelle erhöht sich die Bewertungsgröße *Z*(*τ*) und nimmt so lange zu, bis die Echostärke die Schwelle wieder unterschreitet. Ab diesem Zeitpunkt nimmt sie wieder ab, bis die Echostärke wieder überschritten ist. Zum Zeitpunkt *τ*₁ überschreitet die Bewertungsgröße *Z*(*τ*) die Schwelle *Z_{S}*. Der entsprechende Zeitpunkt *τ*₁ wird für die Weiterverarbeitung gespeichert. Unterschreitet *Z*(*τ*) die Schwelle *Z_{S}* wieder, so wird wiederum der entsprechende Zeitpunkt *τ*₀ bei der Weiterverarbeitung z.B. durch Zwischenspeicherung berücksichtigt. Aus dem Zeitpunkt *τ*₁ und dem Zeitpunkt *τ*₀ kann in einer nachfolgenden Pulsauswertung die Echolaufzeit bestimmt werden. Dazu bedient man sich geeigneter zur Verfügung stehender Aufbereitungsprinzipien.

Ein Grundgedanke der Erfindung ist, dass ein Echo dann als Echopuls erkannt wird, wenn die Größe *Z*(*τ*) zumindest kurzzeitig die Schwelle *Z_{S}* überschreitet. Anhand von Figur 9, unten, wird deutlich, wie mit Hilfe der erfindungsmäßigen Lösung trotz der in Figur 9, oben, dargestellten eingekerbten Verläufe der Signalstärke der Echopuls detektiert werden kann.

Bevorzugt wird hier der Wert von Tₘᵢₙ auf >50% des Sendepulsdauer gestellt werden, bevorzugt auf 80% bis 90%. Berücksichtigt man darüber hinaus auch das zeitliche Zerlaufen des ursprünglichen Sendepulses durch die in der Übertragungsstrecke befindlichen Übertragungsglieder mit integrierenden Eigenschaften, so können für Tₘᵢₙ auch Werte >100% der Sendepulsdauer Sinn machen.

Ein Vorteil des erfindungsgemäßen Verfahrens gegenüber den herkömmlichen Verfahren ist, dass ein systemtechnischer Gewinn in der Erhöhung von Tₘᵢₙ erreicht wird, da kurze störende Pulse nicht mehr fälschlicherweise als Echopuls gewertet werden. Ein weiterer Gewinn ist, dass bei großem Tₘᵢₙ die Empfindlichkeitsschwelle *l*(*τ*) abgesenkt werden kann, weil die sonst damit verbundene Zunahme von fälschlicherweise gemachten Echopulsdetektionen durch Störung unterdrückt wird. Denn statistisch gesehen ist es unwahrscheinlich, insbesondere bei schmalbandigen Bandpasssignalen, dass die so erhöht eingestellte lange Dauer von Tₘᵢₙ die Störung eine hinreichend hohe Stärke haben wird.

Somit besteht ein erheblicher Vorteil gegenüber einer Lösung, bei der Tₘᵢₙ auf nur relativ kleine Werte parametriert ist, bei der natürlich auch jeder Störer und jeder kurze Reflex, der größer als Tₘᵢₙ ist, als Echo erkannt wird. Besteht ein Echo aus mehreren kurzen Pulsen, wird bisher oft der erste Puls als der Repräsentative verwendet, und die Nachfolgepulse werden ignoriert. Je nachdem, ob und wenn ja wo eine oben gezeigte Einkerbung auftritt, springt die mit dem Puls detektierte Echolaufzeit entsprechend. Im Stand der Technik wirkt man dem entgegen, indem die Empfindlichkeitsschwelle *l*(*τ*) entsprechend hoch eingestellt wird, was natürlich mit Empfindlichkeitsverlust und damit mit Reichweiteverlust einhergeht.

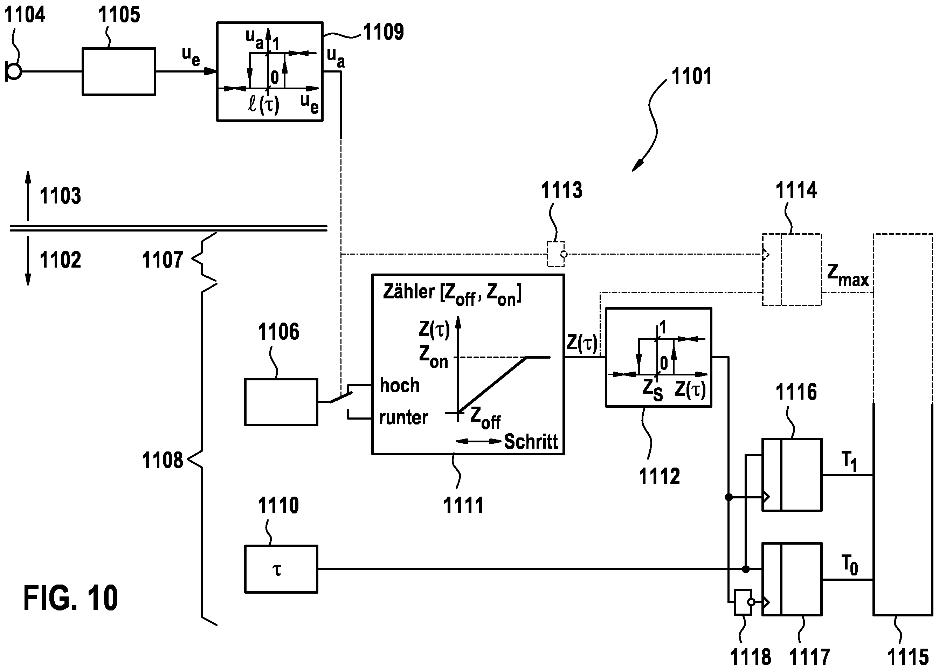

Eine mögliche technische Realisierung des erfindungsgemäßen Verfahrens ist in Figur 10 dargestellt. Eine Vorrichtung 1101 zur Bestimmung der Position und/oder Bewegung von Objekten in der Umgebung eines Bewegungshilfsmittels mittels pulsförmig ausgesendeter und an mindestens einem Objekt reflektierter Schallsignale weist ein Mikrofon 1104, einen Empfangsfilter 1105 sowie einen Filter-Schwellenschalter 1109 auf.

Die verschiedenen Verfahren zur Erzeugung des Vergleichssignals *u*ₐ(*τ*) wurden schon eingangs bei der Diskussion des Standes der Technik beschrieben. Das erfindungsgemäße Verfahren kann mit geeigneten Varianten des Standes der Technik zusammen verwendet werden, die dazu dienen, die Überschreitung des momentanen Werts des Echopulses über eine Empfindlichkeitsschwelle *l*(*τ*) zu einem Zeitpunkt *τ* festzustellen und daraufhin als ein Zwischenergebnis ein logisches Signal *u*ₐ(*τ*) auszugeben. Einige beispielhafte Varianten wurden weiter oben im einleitenden Teil erwähnt.

Die Komponenten, die in Figur 10 ganzheitlich mit dem Bezugszeichen 1103 bezeichnet werden, sind auch in Vorrichtungen gemäß dem Stand der Technik enthalten, vergleiche hierzu beispielsweise Figur 6. Die in Figur 10 ganzheitlich mit dem Bezugszeichen 1102 bezeichneten Komponenten sind dahingegen erfindungsgemäß angepasst bzw. neu eingeführt. Mit dem Bezugszeichen 1108 werden Komponenten einer optimalen Echolaufzeitauswertung bezeichnet.

In der hier beispielhaft dargestellten erfindungsmäßigen technischen Realisierung steuert *u*ₐ(*τ*) die Richtung eines Zählers 1111, der mit einem Zahltaktgenerator 1106 angesteuert wird und dessen Zählerstand die Größe *Z*(*τ*) repräsentiert. Der Wertebereich des Zählers 1111 wird durch *Z_{off}* und *Zₒₙ* begrenzt. Ferner wird der vor dem Zähler 1111 liegende Zähltaktgenerator 1106 durch Tₘᵢₙ beeinflusst. Bevorzugt sollte er so parametriert sein, dass ein zeitkontinuierliches Zunehmen von *Z*(*τ*) bei ununterbrochenem kontinuierlichem Zunehmen der Bewertungsgröße *Z*(*τ*) von *Z_{off}* bis zum Erreichen von *Z_{S}* eine Zeit *T*ₘᵢₙ benötigt, und dass das zeitkontinuierliche Abnehmen von *Z*(*τ*) bei ununterbrochenem kontinuierlichem Abnehmen von *Z*(*τ*) von *Zₒₙ* bis zum Erreichen von *Z_{S}* eine Zeit Tₘᵢₙ benötigt (vergleiche hierzu den abhängigen Anspruch 5).

Dem Zähler 1111 folgt ein Schwellenschalter 1112, mit der Schwelle *Z_{S}*. Überschreitet *Z*(*τ*) die Schwelle *Z_{S},* übernimmt ein nachfolgendes flankengetriggertes Register 1116 den an seinem Eingang anliegenden momentanen Wert des davor liegenden Zeitgebers 1110 für die Echolaufzeit *τ*. Unterschreitet *Z*(*τ*) die Schwelle *Z_{S}*, übernimmt ein nachfolgendes flankengetriggertes Register 1117 dank des dazwischen geschalteten Inverters 1118 den an seinem Eingang anliegenden momentanen Wert der Echolaufzeit *τ*.

Eine nicht näher beschriebene nachfolgende Aufbereitungseinrichtung 1115 bestimmt aus zumindest einer der beiden Größen *τ*₁ oder *τ*₀ mittels eines hier nicht näher im Detail beschriebenen Aufbereitungsprinzips eine Information über die Echolaufzeit, zur Weiterverarbeitung in dem System der Fahrzeugumfelddetektion. Die Aufbereitungseinrichtung 1115 wird dabei stets dann aktiv, wenn sich zumindest die auszuwertenden Größen *τ*₁ und/oder *τ*₀ geeignet ändert haben.

Neben den Größen *τ*₁ und *τ*₀ kann eine Aufbereitungsschaltung 1115 auch aus dem Verlauf von *Z*(*τ*) zwischen den Zeitpunkten *τ*₁ und *τ*₀ auf die Art des Eingangssignals schlussfolgern. Weist die Echostärke zwischen den Zeitpunkten *τ*₁ und *τ*₀ beispielsweise zumindest eine Einkerbung auf, so ist der Wert von *Z*(*τ*) beim Beginn des letzten Unterschreitens von *Z_{S}* durch *Z*(*τ*), d.h., zum Zeitpunkt *τ*_{E}, d.h., *Z*(*τ*_{E}), kleiner als wenn die Signalstärke zwischen den Zeitpunkten *τ*₁ und *τ*₀ keine Einkerbung aufgewiesen hätte.

In Figur 10 ist mit Strich-Punkt-Linien eine optional mögliche Ergänzung 1107 eingetragen, mit deren Hilfe man den Wert *Z*(*τ*_{E}) = *Z*ₘₐₓ gewinnen kann. Mit der "1"-"0"-Flanke des Vergleichssignals *u*ₐ(*τ*) wird mittels eines Inverters 1113 ein flankengetriggertes Register 1114 zur Übernahme des zu dem Zeitpunkt herrschenden Wertes von *Z*(*τ*) aufgefordert.

Neben der obigen schriftlichen Offenbarung wird hiermit zur weiteren Offenbarung der Erfindung explizit auf die Darstellung in den Figuren 1 bis 10 Bezug genommen.

## Patentansprüche

1. Verfahren zur Bestimmung der Position und/oder Bewegung von Objekten in der Umgebung eines Bewegungshilfsmittels mittels pulsförmig ausgesendeter und an mindestens einem Objekt reflektierter Schallsignale, wobei eine momentane Stärke mindestens eines empfangenen reflektierten Schallsignals, im Folgenden als Echopuls bezeichnet, mittels eines Echopuls-Schwellenwertes *l*(*τ*) bewertet wird, **dadurch gekennzeichnet dass**
ein Echopuls für eine Weiterverarbeitung als gültiger Echopuls anerkannt wird, wenn die zeitliche Summe der Überschreitungen des Echopuls-Schwellenwertes *l*(*τ*) durch den Verlauf der Echoamplitude *r̂*(*τ*) im Umfeld von einer oder mehreren kurzzeitigen Einkerbungen, die sich als Unterschreitungen des Echopuls-Schwellenwertes *l*(*τ*) durch den Echoamplitudenverlauf *r̂*(*τ*) darstellen, größer ist als eine vorbestimmte Zeitdauer Tₘᵢₙ zuzüglich der Summe der Dauern der einen oder mehreren Unterschreitungen, wobei eine Bewertungsgröße *Z*(*τ*) in Abhängigkeit von der momentanen Stärke des Echopulses zeitproportional verändert wird, indem ab einem ersten Überschreiten des Echopuls-Schwellenwertes *l*(*τ*) durch den Echopuls die Bewertungsgröße *Z*(*τ*) startend von einer Anfangsgröße *Z_{off}* in Richtung zu einer maximalen Endgröße *Zₒₙ* hin verändert wird, solange die maximale Endgröße *Zₒₙ* nicht erreicht ist und die Stärke des Echopulses den Echopuls-Schwellenwert *l*(*τ*) überschreitet, und die Bewertungsgröße *Z*(*τ*) in Richtung von der maximalen Endgröße *Zₒₙ* zu der Anfangsgröße *Z_{off}* hin verändert wird, solange die Anfangsgröße *Z_{off}* nicht wieder erreicht ist und die momentane Stärke des Echopulses den Echopuls-Schwellenwert *l*(*τ*) unterschreitet.

2. Verfahren nach Anspruch 1, wobei eine Unterschreitung des Echopuls-Schwellenwertes *l*(*τ*) als kurzzeitige Unterschreitung erkannt wird, wenn die Zeitdauer der jeweiligen Unterschreitung eine zweite vorbestimmte Zeitdauer Tₚ, deren Länge beispielsweise in dem Bereich von 0,5 bis 2 Schwingungsperioden eines Echopulses liegt, nicht überschreitet.

3. Verfahren nach Anspruch 1 oder 2, wobei die Bewertungsgröße *Z*(*τ*) mittels eines Bewertungsgrößen-Schwellenwerts *Z_{S}* bewertet wird, wobei ein erster Zeitpunkt *τ*₁ des Überschreitens des Bewertungsgrößen-Schwellenwerts *Z_{S}* durch die Bewertungsgröße *Z*(*τ*) sowie ein zweiter Zeitpunkt *τ*₀ des Unterschreitens des Bewertungsgrößen-Schwellenwerts *Z_{S}* durch die Bewertungsgröße *Z*(*τ*) erfasst werden.

4. Verfahren nach Anspruch 3, wobei anhand des ersten Zeitpunktes *τ*₁ des Überschreitens von *Z_{S}* durch die Bewertungsgröße *Z*(*τ*) und des zweiten Zeitpunktes *τ*₀ des Unterschreitens *Z_{S}* durch die Bewertungsgröße *Z*(*τ*) ein Maß für die Echolaufzeit und/oder ein Maß für die Echopulsdauer eines pulsförmigen ausgesendeten Schallsignals bestimmt wird.

5. Verfahren gemäß einem der vorhergehenden Ansprüche, wobei die Veränderungsrate des zeitproportionalen Veränderns der Bewertungsgröße *Z*(*τ*) derart eingestellt wird, dass ein zeitkontinuierliches streng monotones Verändern der Bewertungsgröße *Z*(*τ*) startend von *Z_{off}* bis zum Erreichen von *Z_{S}* die vorbestimmte Zeitdauer *T*ₘᵢₙ dauert, und/oder dass ein zeitkontinuierliches streng monotones Verändern der Bewertungsgröße *Z*(*τ*) startend von *Zₒₙ* bis zum Erreichen von *Z_{S}* die vorbestimmte Zeitdauer *T*ₘᵢₙ dauert.

6. Verfahren nach einem der vorhergehenden Ansprüche, wobei ein pulsförmig moduliertes Signal mit zeitinvarianter fester Schallfrequenz oder ein frequenzmoduliertes Signal oder ein Gemisch von Signalen mehrerer Schallsignale mit fester und/oder frequenzmodulierter Trägerfrequenz ist ausgesendet wird.

7. Verfahren nach einem der vorhergehenden Ansprüche, wobei bei einer Auswertung der Echopulse die Zeitdifferenz zwischen dem Ende des Aussendens eines ausgesendeten Schallpulses und dem Zeitpunkt *τ*_{E} = 0.5.(*τ*₀ + *τ*₁) als Echolaufzeit genutzt wird und/oder die Zeitdifferenz (*τ*₀-*τ*₁) linear in die Berechnung der Echopulsdauer eingeht.

8. Verfahren nach Anspruch 7, wobei bei der Auswertung der Echopulse die Zeitdauer *T_{Puls}* = *T*ₘᵢₙ +(*τ*₀-*τ*₁) als Echopulsdauer verwendet wird.

9. Verfahren nach einem der vorhergehenden Ansprüche, wobei die Echopulsdauer und/oder die Echolaufzeit mittels Intrapulsanalyse bestimmt werden.

10. Verfahren nach einem der vorhergehenden Ansprüche, wobei zur Bewertung des Echopulses ferner mindestens ein derartige Zwischenwert *Z*ᵢₙₜ der Bewertungsgröße mit herangezogen wird, bei dem begonnen wird, die Bewertungsgröße *Z*(*τ*) in Richtung von der maximalen Endgröße *Zₒₙ* zu der Anfangsgröße *Z_{off}* hin zu verändern.

11. Verfahren nach einem der vorhergehenden Ansprüche, wobei anhand von eines Ergebnisses einer Auswertung mindestens eines Echopulses ein Benutzer des Bewegungshilfsmittels über den Abstand, die Position und/oder Bewegungsrichtung von mindestens einem in der Umgebung befindlichen Objekt mittels optischer und/oder akustischer Mittel informiert wird und/oder die Bewegungsrichtung und/oder Geschwindigkeit lenkend bzw. bremsend automatisch verändern wird und/oder Mittel zur Senkung von Unfallfolgen, wie Gurtstraffer, und/oder Airbags und/oder Fensterheber und/oder Anheben der Motorhaube aktiviert oder gesteuert werden.

12. Vorrichtung, zum Einbau in ein Bewegungshilfsmittel, zur Bestimmung der Position und/oder Bewegung von Objekten in der Umgebung des Bewegungshilfsmittels mittels pulsförmig ausgesendeter und an mindestens einem Objekt reflektierter Schallsignale, dazu eingerichtet, das Verfahren nach einem der vorhergehenden Ansprüche durchzuführen.

13. Bewegungshilfsmittel mit einer Vorrichtung zur Bestimmung der Position und/oder Bewegung von Objekten in der Umgebung eines Bewegungshilfsmittels mittels pulsförmig ausgesendeter und mindestens einem an einem Objekt reflektierter Schallsignale, wobei die Vorrichtung dazu eingerichtet ist, das Verfahren nach einem der Ansprüche 1 bis 11 durchzuführen, und wobei das Bewegungshilfsmittel ein Krankenfahrstuhl, ein Segway, ein Fahrrad, ein Personenkraftfahrzeug, Lastkraftfahrzeug, Bus, oder ein Elektroauto ist.

## Claims

1. Method for determining the position and/or movement of objects in the surroundings of a movement aid by means of sound signals that are emitted in pulse form and that are reflected at at least one object, wherein a current strength of at least one received reflected sound signal, referred to below as an echo pulse, is evaluated by means of an echo pulse threshold *l*(*τ*), **characterized in that**
an echo pulse is acknowledged as a valid echo pulse for further processing if the temporal sum of the echo pulse threshold *l*(*τ*) being overshot by the curve of the echo amplitude *r̂*(*τ*) in the surroundings of one or more brief notches, which are represented by the echo pulse threshold *l*(*τ*) being undershot by the echo amplitude curve *r̂*(*τ*), is greater than a predetermined time period *Tₘᵢₙ* plus the sum of the durations of the one or more undershoots, wherein an evaluation quantity *Z*(*τ*) is modified in time-proportional fashion depending on the current strength of the echo pulse by virtue of, after the echo pulse threshold *l*(*τ*) being overshot for the first time by the echo pulse, the evaluation quantity *Z*(*τ*) being modified, starting from an initial quantity *Z_{off},* in the direction of a maximum final quantity *Zₒₙ* as long as the maximum final quantity *Zₒₙ* has not been reached and the strength of the echo pulse overshoots the echo pulse threshold *l*(*τ*), and the evaluation quantity *Z*(*τ*) being modified in the direction from the maximum final quantity *Zₒₙ* to the initial quantity *Z_{off}* as long as the initial quantity *Z_{off}* has not been reached again and the current strength of the echo pulse undershoots the echo pulse threshold *l*(*τ*).

2. Method according to Claim 1, wherein an undershoot of the echo pulse threshold *l*(*τ*) is identified as a brief undershoot if the time period of the respective undershoot does not overshoot a second predetermined time period *Tₚ*, the length of which lies in the range of 0.5 to 2 oscillation periods of an echo pulse, for example.

3. Method according to Claim 1 or 2, wherein the evaluation quantity *Z*(*τ*) is evaluated by means of an evaluation quantity threshold *Z_{S}*, wherein a first time *τ*₁ at which the evaluation quantity *Z*(*τ*) overshoots the evaluation quantity threshold *Z_{S}* and a second time *τ*₀ at which the evaluation quantity *Z*(*τ*) undershoots the evaluation quantity threshold *Z_{S}* are detected.

4. Method according to Claim 3, wherein a measure for the echo time-of-flight and/or a measure for the echo pulse duration of a sound signal that was emitted in pulse form are/is determined on the basis of the first time *τ*₁ at which the evaluation quantity *Z*(*τ*) overshoots *Z_{S}* and the second time *τ*₀ at which the evaluation quantity *Z*(*τ*) undershoots *Z_{S}*.

5. Method according to any one of the preceding claims, wherein the rate of change of the time-proportional change of the evaluation quantity *Z*(*τ*) is set in such a way that a time-continuous strictly monotonic change in the evaluation quantity *Z*(*τ*), starting from *Z_{off}* until *Z_{S}* is reached, takes the predetermined time period *T*ₘᵢₙ and/or that a time-continuous strictly monotonic change in the evaluation quantity *Z*(*τ*), starting from *Zₒₙ* until *Z_{S}* is reached, takes the predetermined time period Tₘᵢₙ.

6. Method according to any one of the preceding claims, wherein a pulse-shaped modulated signal with a time-invariant, fixed sound frequency or a frequency-modulated signal or a mixture of signals of a plurality of sound signals with a fixed and/or frequency-modulated carrier frequency is emitted.

7. Method according to any one of the preceding claims, wherein the time difference between the end of the emission of an emitted sound pulse and the time *τ*_{E} = 0.5·(*τ*₀ + *τ*₁) is used as an echo time-of-flight when evaluating the echo pulses and/or the time difference (*τ*₀-*τ*₁) is included linearly in the calculation of the echo pulse duration.

8. Method according to Claim 7, wherein the time period *Tₚᵤₗₛₑ* = *Tₘᵢₙ* + (*τ*₀ - *τ*₁) is used as echo pulse duration when evaluating the echo pulses.

9. Method according to any one of the preceding claims, wherein the echo pulse duration and/or the echo time-of-flight are/is determined by means of intra-pulse analysis.

10. Method according to any one of the preceding claims, wherein, for the purposes of evaluating the echo pulse, at least one such intermediate value *Zᵢₙₜ* of the evaluation quantity at which a start is made at modifying the evaluation quantity *Z*(*τ*) in the direction from the maximum final quantity *Zₒₙ* to the initial quantity *Z_{off}* is further also included.

11. Method according to any one of the preceding claims, wherein, on the basis of a result of an evaluation of at least one echo pulse, a user of the movement aid is informed, by means of optical and/or acoustic means, about the distance, the position and/or the movement direction of at least one object situated in the surroundings and/or the movement direction and/or speed are/is automatically changed in steering or braking fashion and/or means for reducing the effects of an accident, such as belt pretensions and/or airbags and/or window lifts and/or a raising of the bonnet, are activated or controlled.

12. Apparatus, for installation in a movement aid, for determining the position and/or movement of objects in the surroundings of the movement aid by means of sound signals that are emitted in pulse form and that are reflected at at least one object, configured to carry out the method according to any one of the preceding claims.

13. Movement aid comprising an apparatus for determining the position and/or movement of objects in the surroundings of a movement aid by means of sound signals that are emitted in pulse form, at least one of which is reflected at an object, wherein the apparatus is configured to carry out the method according to any one of Claims 1 to 11 and wherein the movement aid is a wheelchair, a Segway, a bicycle, a passenger motor vehicle, a truck, bus or an electric car.

## Revendications

1. Procédé pour la détermination de la position et/ou du mouvement d'objets dans l'environnement d'un moyen d'aide au déplacement au moyen de signaux acoustiques émis sous forme d'impulsions et réfléchis sur au moins un objet, dans lequel une intensité instantanée d'au moins un signal acoustique réfléchi reçu, ci-après désigné sous le nom d'impulsion d'écho, est évaluée au moyen d'une valeur de seuil d'impulsion d'écho *l*(*τ*), **caractérisé en ce qu'**une impulsion d'écho est reconnue comme étant une impulsion d'écho valide pour un traitement ultérieur si la somme temporelle des dépassements de la valeur de seuil d'impulsion d'écho *l*(*τ*) par la courbe de l'amplitude d'écho *r̂*(*τ*) dans l'environnement d'un ou plusieurs creux de courte durée, qui sont représentés sous la forme d'abaissements de la courbe d'amplitude d'écho *r̂*(*τ*) en-dessous de la valeur de seuil d'impulsion d'écho *l*(*τ*), est supérieure à une durée prédéterminée *T*ₘᵢₙ additionnée à la somme des durées desdits un ou plusieurs abaissements, dans lequel une grandeur d'évaluation *Z*(*τ*) est modifiée proportionnellement dans le temps en fonction de l'intensité instantanée de l'impulsion d'écho, en modifiant la grandeur d'évaluation *Z*(*τ*) dans une direction orientée vers une grandeur finale maximale *Zₒₙ* en partant d'une grandeur initiale *Z_{off},* à partir d'un premier dépassement de la valeur de seuil d'impulsion d'écho *l*(*τ*) par l'impulsion d'écho, tant que la grandeur finale maximale *Zₒₙ* n'est pas atteinte et que l'intensité de l'impulsion d'écho dépasse la valeur de seuil d'impulsion d'écho *l*(*τ*), et en modifiant la grandeur d'évaluation *Z*(*τ*) dans une direction allant de la grandeur finale maximale *Zₒₙ* vers la grandeur initiale *Z_{off},* tant que la grandeur initiale *Z_{off}* n'est pas atteinte à nouveau et que l'intensité instantanée de l'impulsion d'écho s'abaisse en-dessous de la valeur de seuil d'impulsion d'écho *l*(*τ*).

2. Procédé selon la revendication 1, dans lequel un abaissement en-dessous de la valeur de seuil d'impulsion d'écho *l*(*τ*) est détecté comme étant un abaissement de courte durée si la durée de l'abaissement respectif ne dépasse pas une seconde durée prédéterminée Tₚ dont la longueur se situe par exemple dans la plage de 0,5 à 2 périodes d'oscillation d'une impulsion d'écho.

3. Procédé selon la revendication 1 ou 2, dans lequel la grandeur d'évaluation *Z*(*τ*) est évaluée au moyen d'une valeur de seuil de grandeur d'évaluation *Z_{S}*, dans lequel un premier instant *τ*₁ d'abaissement de la grandeur d'évaluation *Z*(*τ*) en-dessous de la valeur de seuil de grandeur d'évaluation *Z_{S}* et un second instant *τ*₀ d'abaissement de la grandeur d'évaluation *Z*(*τ*) en-dessous de la valeur de seuil de grandeur d'évaluation Zₛ sont détectés.

4. Procédé selon la revendication 3, dans lequel une mesure du temps de propagation de l'écho et/ou une mesure de la durée de l'impulsion d'écho d'un signal acoustique émis sous forme d'impulsions est déterminée sur la base du premier instant *τ*₁ de dépassement de *Z_{S}* par la grandeur d'évaluation *Z*(*τ*) et du deuxième instant *τ*₀ d'abaissement de la grandeur d'évaluation *Z*(*τ*) en-dessous de *Z_{S}.*

5. Procédé selon l'une des revendications précédentes, dans lequel la vitesse de variation de la variation proportionnelle au temps de la grandeur d'évaluation *Z*(*τ*) est réglée de telle sorte qu'une variation temporelle continue et strictement monotone de la grandeur d'évaluation *Z*(*τ*) à partir de *Z_{off}* jusqu'à ce que *Z_{S}* soit atteinte a une durée égale à la période prédéterminée *T*ₘᵢₙ, et/ou qu'une variation temporelle continue, strictement monotone de la grandeur d'évaluation *Z*(*τ*)*,* à partir de *Zₒₙ* jusqu'à ce que *Z_{S}* soit atteinte a une durée égale à la période prédéterminée *T*ₘᵢₙ.

6. Procédé selon l'une des revendications précédentes, dans lequel un signal modulé sous forme d'impulsions ayant une fréquence acoustique fixe invariable dans le temps ou un signal modulé en fréquence ou un mélange de signaux constitué de plusieurs signaux acoustiques ayant une fréquence porteuse fixe et/ou modulée en fréquence est émis.

7. Procédé selon l'une des revendications précédentes, dans lequel, lors d'une évaluation des impulsions d'écho, la différence de temps entre la fin de l'émission d'une impulsion acoustique émise et l'instant *τ*_{E} = 0,5·(*τ*₀ + *τ*₁) est utilisée en tant que temps de propagation de l'écho et/ou la différence de temps (*τ*₀ - *τ*₁) intervient linéairement dans le calcul de la durée de l'impulsion d'écho.

8. Procédé selon la revendication 7, dans lequel, lors de l'évaluation de l'impulsion d'écho, la durée *T_{Puls}* = *T*ₘᵢₙ + (*τ*₀ - *τ*₁) est utilisée en tant que durée d'impulsion d'écho.

9. Procédé selon l'une des revendications précédentes, dans lequel la durée de l'impulsion d'écho et/ou le temps de propagation de l'écho sont déterminés par analyse intra-impulsion.

10. Procédé selon l'une des revendications précédentes, dans lequel, pour l'évaluation de l'impulsion d'écho, au moins une valeur intermédiaire *Z*ᵢₙₜ de la grandeur d'évaluation est également prise en compte, selon laquelle on commence par modifier la grandeur d'évaluation *Z*(*τ*) dans une direction allant de la grandeur finale maximale *Zₒₙ* vers la grandeur initiale *Z_{off}.*

11. Procédé selon l'une des revendications précédentes, dans lequel un utilisateur du moyen d'aide au déplacement est informé par des moyens optiques et/ou acoustiques sur la distance, la position et/ou la direction du déplacement d'au moins un objet se trouvant dans l'environnement sur la base d'un résultat d'une évaluation d'au moins une impulsion d'écho, et/ou dans la direction de déplacement et/ou la vitesse est/sont automatiquement modifiée(s) par braquage et/ou freinage et/ou des moyens destinés à réduire les conséquences d'un accident, tels que des tendeurs de ceinture et/ou des airbags et/ou des lève-vitres et/ou des releveurs de capot sont activés ou commandés.

12. Dispositif, destiné à être monté dans un moyen d'aide au déplacement, pour déterminer la position et/ou le mouvement d'objets dans l'environnement du moyen d'aide au déplacement au moyen de signaux acoustiques émis sous forme d'impulsions et réfléchis sur au moins un objet, et conçu pour la mise en oeuvre du procédé selon l'une des revendications précédentes.

13. Moyen d'aide au déplacement comportant un dispositif de détermination de la position et/ou du mouvement d'objets dans l'environnement d'un moyen d'aide au déplacement au moyen de signaux acoustiques émis sous forme d'impulsions et d'au moins un signal acoustique réfléchi sur un objet, dans lequel le dispositif est conçu pour mettre en oeuvre le procédé selon l'une des revendications 1 à 11, et dans lequel le moyen d'aide au déplacement est un ascenseur pour patients, un segway, un vélo, une voiture particulière, un camion, un bus ou une voiture électrique.
